(19) Europäisches Patentamt / European Patent Office / Office européen des brevets

(11) **EP 4 394 665 A1**

(12) **EUROPEAN PATENT APPLICATION**

(43) Date of publication:
**03.07.2024 Bulletin 2024/27**

(21) Application number: **23192936.5**

(22) Date of filing: **23.08.2023**

(51) International Patent Classification (IPC):
**G06N 5/01** (2023.01) **G06F 17/11** (2006.01)

(52) Cooperative Patent Classification (CPC):
**G06N 5/01; G06F 17/11**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.12.2022 JP 2022207956**

(71) Applicant: **Fujitsu Limited
Kawasaki-shi, Kanagawa 211-8588 (JP)**

(72) Inventor: **ISHIDA, Yuichi
Kawasaki-shi, Kanagawa 211-8588 (JP)**

(74) Representative: **Hoffmann Eitle
Patent- und Rechtsanwälte PartmbB
Arabellastraße 30
81925 München (DE)**

(54) **TEMPERATURE ADJUSTMENT PROGRAM, DATA PROCESSING APPARATUS, AND DATA PROCESSING METHOD**

(57)    A temperature adjustment program that causes a computer to execute a process, the process includes acquiring an average value of values of an evaluation function obtained in search processing of a solution to an optimization problem by a replica circuit to which a minimum temperature value is set among a plurality of replica circuits a plurality of times during the search processing by a replica exchange method by using the plurality of replica circuits corresponding to a plurality of replicas of the evaluation function based on an Ising model obtained by converting the optimization problem; changing the minimum temperature value based on a comparison result between a first average value among the average values acquired the plurality of times and a second average value acquired before the first average value; and setting the minimum temperature value after the change.

## FIG. 1

EP 4 394 665 A1

**Description**

FIELD

The embodiments discussed herein are related to a temperature adjustment program, a data processing apparatus, and a data processing method.

BACKGROUND

As a method of searching for a solution to a combinatorial optimization problem, there is a method of converting the combinatorial optimization problem into an Ising model representing a behavior of a spin of a magnetic substance. The Ising model is represented by an Ising-type evaluation function for evaluating the solution to the combinatorial optimization problem. The Ising-type evaluation function includes a plurality of state variables and a plurality of weight values. A state of the Ising model is represented by values of the plurality of state variables. The Ising-type evaluation function has a state variable that is a binary variable having a value of 0 or 1 (or -1 or +1). The state variable may be denoted by a bit. The value of the Ising-type evaluation function may also be referred to as energy of the Ising model.

A Markov-chain Monte Carlo (MCMC) method is used in the search for a solution. Hereinafter, the search for a solution by the MCMC method is referred to as MCMC processing. For example, in the MCMC processing, a state transition is accepted with an acceptance probability of the state transition defined by a Metropolis method or a Gibbs method. At this time, a state transition that increases energy is also stochastically permitted. As the increase amount of energy is larger, the acceptance probability is lower.

As one type of the MCMC method, there is a replica exchange method (also referred to as a parallel tempering method or the like). According to the replica exchange method, the MCMC processing using a plurality of temperature values is performed independently of each other by a plurality of replicas of the Ising model. For each certain number of trials, energies obtained in each MCMC processing are compared with each other, and states for the two temperature values are exchanged with an appropriate exchange probability. Compared with a simulated annealing method in which the temperature value is gradually decreased, the replica exchange method reduces a possibility of being trapped in a local solution and enables an efficient search of the entire solution space.

A method for adjusting any one of a plurality of temperature values between two fixed temperature values during processing of the replica exchange method has been proposed in related art. A method for adjusting an interval between temperature values by using specific heat has been proposed in related art in order to improve uniformity of the exchange probability.

Japanese Laid-open Patent Publication Nos. 2021-140779 and 2021-43503 are disclosed as related art.

[TECHNICAL PROBLEM]

At the time of solving an optimization problem by using the replica exchange method, in a case where a minimum temperature value (hereafter, may also be referred to as a minimum temperature) among a plurality of temperature values is not appropriately set, a time until a solution is obtained may be very long. For example, it is because, when the minimum temperature is too low, state transition accompanied by an increase in energy hardly occurs, and once a local solution is obtained, there is a possibility that it may not be possible to escape from the local solution.

However, in order to determine an appropriate minimum temperature, a procedure of performing solution search processing by using a certain minimum temperature and adjusting a minimum temperature based on a result of the search processing is repeated. For this reason, there is a problem that it takes time to adjust the minimum temperature.

In one aspect, an object of the present disclosure is to provide a temperature adjustment program, a data processing apparatus, and a data processing method capable of shortening an adjustment time of a minimum temperature used in a replica exchange method.

[ADVANTAGEOUS EFFECTS OF INVENTION]

In one aspect of the present disclosure, it is possible to shorten the adjustment time of the minimum temperature used in the replica exchange method.

SUMMARY

According to an aspect of the embodiments, a temperature adjustment program that causes a computer to execute a process, the process includes acquiring an average value of values of an evaluation function obtained in search processing of a solution to an optimization problem by a replica circuit to which a minimum temperature value is set among a plurality of replica circuits a plurality of times during the search processing by a replica exchange method by using the plurality of replica circuits corresponding to a plurality of replicas of the evaluation function based on an Ising model obtained by converting the optimization problem; changing the minimum temperature value based on a comparison result between a first average value among the average values acquired the plurality of times and a second average value acquired before the first average value; and setting the minimum temperature value after the change.

BRIEF DESCRIPTION OF DRAWINGS

FIG. 1 is a diagram illustrating an example of a data processing apparatus according to a first embodiment;
FIG. 2 is a flowchart illustrating an adjustment procedure of a minimum temperature;
FIG. 3A is a contour diagram illustrating an example of minimum energy obtained in accordance with a combination of a maximum temperature and a minimum temperature when searching for an unconstrained optimization problem;
FIG. 3B is a contour diagram illustrating an example of average energy in a minimum temperature replica, which is obtained in accordance with a combination of a maximum temperature and a minimum temperature when searching for an unconstrained optimization problem;
FIG. 4A is a contour diagram illustrating an example of minimum energy obtained in accordance with a combination of a maximum temperature and a minimum temperature when searching for a constrained optimization problem;
FIG. 4B is a contour diagram illustrating an example of average energy in a minimum temperature replica, which is obtained in accordance with a combination of a maximum temperature and a minimum temperature when searching for a constrained optimization problem;
FIG. 5 is a diagram illustrating an example of a data processing apparatus according to a second embodiment;
FIG. 6 is a diagram illustrating an example of a temperature adjustment unit;
FIG. 7 is a flowchart illustrating a flow of an example of an adjustment procedure of a minimum temperature;
FIG. 8 is a diagram illustrating an example of a calculation result of minimum energy;
FIG. 9 is a diagram illustrating an example of a data processing apparatus according to a third embodiment; and
FIG. 10 is a diagram illustrating an example of hardware of a computer that is an example of the data processing apparatus.

DESCRIPTION OF EMBODIMENTS

Hereinafter, embodiments of the present disclosure will be described with reference to the drawings.

(First Embodiment)

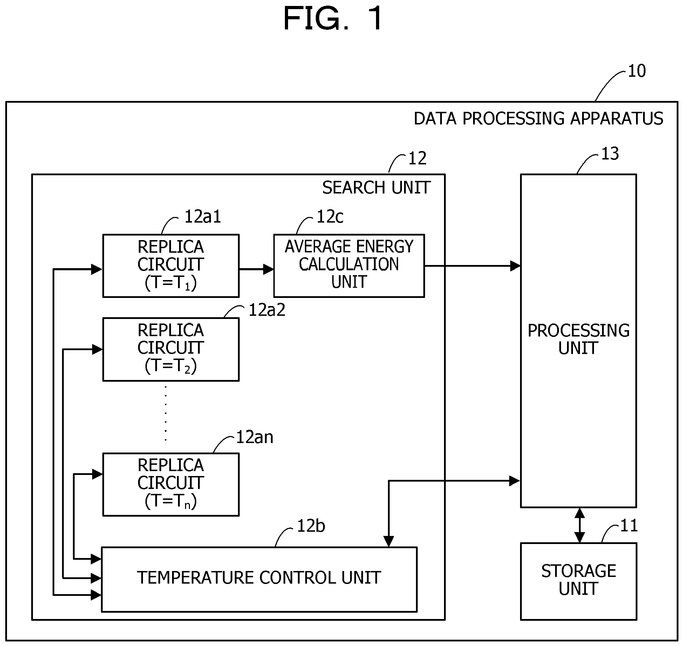

FIG. 1 is a diagram illustrating an example of a data processing apparatus according to a first embodiment.
A data processing apparatus 10 includes a storage unit 11, a search unit 12, and a processing unit 13.
For example, the storage unit 11 is a volatile storage apparatus that is an electronic circuit such as a dynamic random-access memory (DRAM) or a non-volatile storage apparatus that is an electronic circuit such as a hard disk drive (HDD) or a flash memory. The storage unit 11 may include an electronic circuit such as a static random-access memory (SRAM) register.
For example, the storage unit 11 stores information on an optimization problem to be calculated, calculation conditions, and the like. Various programs such as a temperature adjustment program may be stored in the storage unit 11.
For example, the search unit 12 may be implemented by using an electronic circuit such as an application-specific integrated circuit (ASIC) or a field-programmable gate array (FPGA). The search unit 12 may be implemented by software processing in which a processor that is hardware such as a central processing unit (CPU), a graphics processing unit (GPU), or a digital signal processor (DSP) executes a program.
The search unit 12 uses replica circuits $12a1$, $12a2$, ..., and $12an$ corresponding to n replicas of an evaluation function based on an Ising model obtained by converting an optimization problem to be calculated, and searches for a solution to the optimization problem by a replica exchange method.
Energy of the Ising model is defined by, for example, an evaluation function ($E(x)$) as indicated by the following Expression (1).

$$E(\boldsymbol{x}) = -\sum_{\langle i,j \rangle}^{N} W_{ij} x_i x_j - \sum_{i=1}^{N} b_i x_i \qquad (1)$$

A first term on a right side is a sum obtained by adding up products of values of two state variables and a weight coefficient without missing and overlapping for all combinations of the two state variables selectable from all state variables included in the Ising model. $x_i$ is an i-th state variable. $x_j$ is a j-th state variable. $W_{ij}$ is a weight coefficient indicating a weight (for example, strength of coupling) between the i-th state variable and the j-th state variable. N denotes a total number of state variables.

A second term on the right side is a sum of products of a bias coefficient of each of all the state variables and a value of the state variable. $b_i$ indicates a bias coefficient for the i-th state variable.

For example, "-1" of a spin in the Ising model corresponds to a value "0" of the state variable. "+1" of a spin in the Ising model corresponds to a value "1" of the state variable. Therefore, the state variable may also be referred to as a bit taking a value of 0 or 1.

An optimum solution is a state when a minimum value among minimum values of E(x) is obtained. By changing a sign of each term on the right side of Expression (1), the search unit 12 may search for a state in which a value of E(x) becomes a maximum value (in this case, the state when the value of E(x) is maximized is the optimum solution).

Each of the replica circuits 12a1 to 12an repeats MCMC processing. For example, the MCMC processing includes processing of determining whether to permit a change of a bit, based on a comparison result between a change amount of energy when a value of any bit of a plurality of bits is changed and a thermal noise value. The MCMC processing includes processing in which, in a case where it is determined that the change in the value of a certain bit is permitted, a state transition is generated by changing the value of the bit. Hereinafter, changing the value of the bit is referred to as a flip. The thermal noise value is obtained based on a temperature value and a random number value set for each of the replica circuits 12a1 to 12an. As the temperature value increases, an amplitude of the thermal noise value increases.

The search unit 12 further includes a temperature control unit 12b and an average energy calculation unit 12c.

For the replica circuits 12a1 to 12an, the temperature control unit 12b sets temperature values different from each other between the maximum temperature and the minimum temperature. When the minimum temperature is updated by the processing unit 13 described later, the temperature control unit 12b updates each temperature value between the maximum temperature and the minimum temperature based on the maximum temperature set in advance and the minimum temperature after the update. In the example illustrated in FIG. 1, $T_1$ is set in the replica circuit 12a1, $T_2$ is set in the replica circuit 12a2, and $T_n$ is set in the replica circuit 12an as the temperature value (T). $T_1 < T_2 < ... < T_n$. For example, $T_1$ is the minimum temperature, and $T_n$ is the maximum temperature. Hereinafter, a replica corresponding to the replica circuit 12a1 to which the minimum temperature is set is referred to as a minimum temperature replica.

The temperature control unit 12b controls replica exchange in the replica circuits 12a1 to 12an. Based on an exchange probability ($p_{ij}$) represented by the following Expression (2), the temperature control unit 12b determines whether to perform replica exchange for each pair of replica circuits having adjacent temperature values.

$$p_{ij} = \exp\left( (E_i - E_j)\left( \frac{1}{kT_i} - \frac{1}{kT_j} \right) \right) \qquad (2)$$

In Expression (2), $E_i$ is energy corresponding to a state of a replica (hereafter, referred to as a replica i) corresponding to an i-th replica circuit among the replica circuits 12a1 to 12an. $E_j$ is energy corresponding to a state of a replica (hereafter, referred to as a replica j) corresponding to a j-th replica circuit. $T_i$ is a temperature value set for the i-th replica circuit. $T_j$ is a temperature value set for the j-th replica circuit. k is a Boltzmann constant. States of the replicas i and j are represented by N state variables $x_1$ to $x_N$.

At the probability of $p_{ij}$ described above, the temperature control unit 12b causes the state of the replica i and the state of the replica j to be exchanged.

Instead of exchanging the states between the replicas i and j, the temperature control unit 12b may exchange $T_i$ and $T_j$ with the probability of $p_{ij}$ described above.

The average energy calculation unit 12c calculates an average value (hereafter, referred to as average energy) of values of the above-described evaluation function (E(x)) obtained in the search processing by the replica circuit 12a1 to which the minimum temperature is set. For example, the average energy calculation unit 12c updates the average energy every time the replica circuit 12a1 flips any value of $x_1$ to $x_N$.

For example, the processing unit 13 may be implemented by software processing in which a processor that is hardware such as a CPU, a GPU, or a DSP executes a program such as the temperature adjustment program stored in the storage unit 11. The processing unit 13 may be implemented by using an electronic circuit such as an ASIC or an FPGA.

The processing unit 13 has a function of adjusting the minimum temperature that is a minimum value among a plurality of temperature values used for solution search by the replica exchange method.

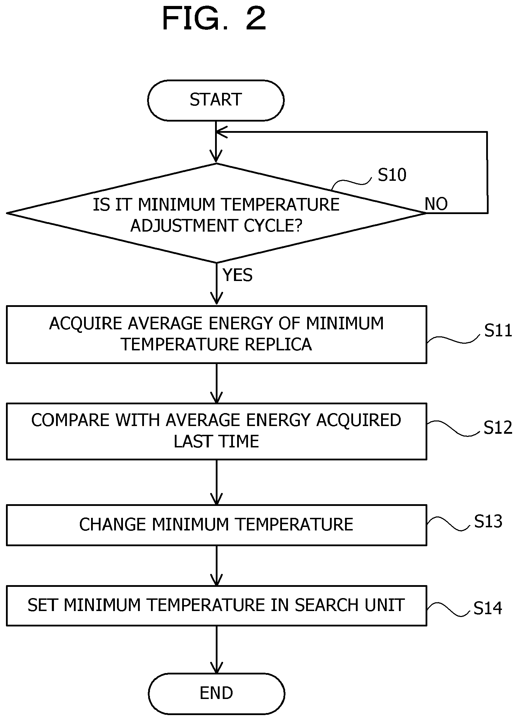

FIG. 2 is a flowchart illustrating an adjustment procedure of the minimum temperature.

Step S10: the processing unit 13 determines whether it is an adjustment cycle of the minimum temperature. For example, the processing unit 13 determines that it is the adjustment cycle of the minimum temperature every time replica exchange is performed a predetermined number of times in the search unit 12. By increasing the number of times of replica exchange serving as the adjustment cycle, adjustment may be performed in consideration of a wider search space, but an adjustment frequency decreases. For this reason, the adjustment cycle may be appropriately set in accordance with a difficulty level of the optimization problem to be calculated, or the like.

Every time the MCMC processing is performed a predetermined number of times in the search unit 12, the processing unit 13 may determine that it is the adjustment cycle of the minimum temperature.

When it is determined that the current cycle is the adjustment cycle of the minimum temperature, the processing unit 13 performs processing in step S11, and when it is determined that the current cycle is not the adjustment cycle of the minimum temperature, the processing unit 13 repeats the processing in step S10.

Step S11: the processing unit 13 acquires average energy of the minimum temperature replica from the search unit 12. The processing unit 13 holds the acquired average energy.

Step S12: the processing unit 13 compares average energy of the minimum temperature replica acquired last time with average energy of the minimum temperature replica acquired this time.

Step S13: based on the comparison result obtained in the processing of step S12, the processing unit 13 changes the minimum temperature. For example, the processing unit 13 changes the minimum temperature as follows.

First, for example, the processing unit 13 divides a range between a lower limit value of a minimum temperature input from a user and a maximum temperature determined in advance by a predetermined division number, and calculates a plurality of candidate values of the minimum temperature having a plurality of steps of magnitude based on the division number. The processing unit 13 sets the lower limit value of the minimum temperature as an initial value for adjusting the minimum temperature. When the average energy of the minimum temperature replica acquired this time is smaller than the average energy of the minimum temperature replica acquired last time, the processing unit 13 changes the minimum temperature to a candidate value larger than the current minimum temperature by one step. When the average energy of the minimum temperature replica acquired this time is equal to or larger than the average energy of the minimum temperature replica acquired last time, the processing unit 13 changes the minimum temperature to a candidate value smaller than the current minimum temperature by one step.

Step S14: the processing unit 13 sets the minimum temperature after the change in the search unit 12.

Accordingly, one-time adjustment processing of the minimum temperature ends. Such adjustment processing is repeated until an end condition of the solution search processing is satisfied.

A reason why the minimum temperature is adjusted based on the change in the average energy of the minimum temperature replica as described above will be described.

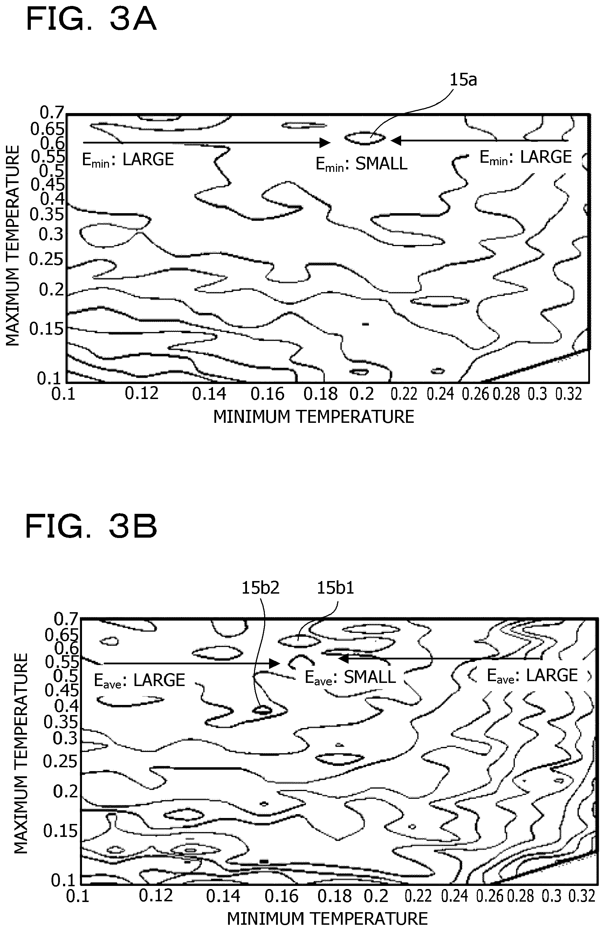

FIG. 3A is a contour diagram illustrating an example of minimum energy obtained in accordance with a combination of a maximum temperature and a minimum temperature when searching for an unconstrained optimization problem. FIG. 3B is a contour diagram illustrating an example of average energy in a minimum temperature replica, which is obtained in accordance with a combination of a maximum temperature and a minimum temperature when searching for an unconstrained optimization problem.

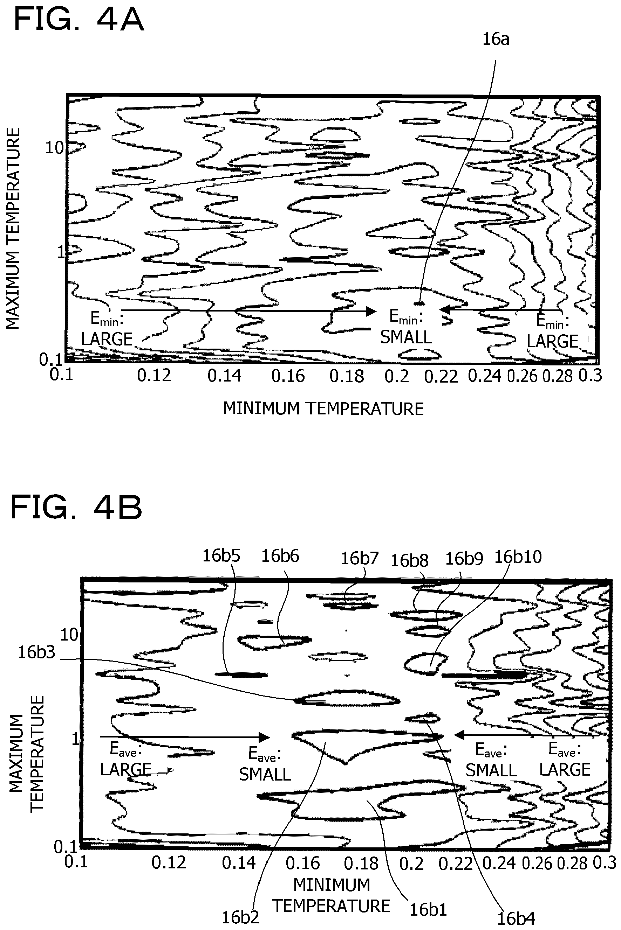

FIG. 4A is a contour diagram illustrating an example of minimum energy obtained in accordance with a combination of a maximum temperature and a minimum temperature when searching for a constrained optimization problem. FIG. 4B is a contour diagram illustrating an example of average energy in a minimum temperature replica, which is obtained in accordance with a combination of a maximum temperature and a minimum temperature when searching for a constrained optimization problem.

Each of the above-described contour diagrams is obtained by plotting minimum energy ($E_{min}$) or average energy ($E_{ave}$) obtained in a state where the maximum temperature and the minimum temperature are fixed.

As the unconstrained optimization problem, G39 of Gset, which is a benchmark problem of a maximum cut problem, is used. A number of state variables included in an evaluation function used for calculation is N = 2000, a number of replicas is n = 80, and an execution time is 60 seconds.

Constraints applied to the constrained optimization problem are a 1-Way 1-hot constraint and a linear inequality constraint. These are represented by constraint terms in a quadratic unconstrained binary optimization (QUBO) format. A 1-hot constraint is a constraint in which a number of state variables having a value of 1 among a plurality of state variables included in an evaluation function is only one. The 1-Way 1-hot constraint is a 1-hot constraint in which each state variable appears only once in the set of constraint expressions. The linear inequality constraint is a constraint representing an inequality to be satisfied by a state. The number of state variables included in the evaluation function used for the calculation is N = 8750, the number of replicas is n = 80, and the execution time is 180 seconds.

In FIGs. 3A, 3B, 4A, and 4B, a vertical axis represents a maximum temperature, and a horizontal axis represents a minimum temperature.

As illustrated in FIGs. 3A and 3B, the contour diagram of the minimum energy and the contour diagram of the average energy in the minimum temperature replica are similar to each other. Although there is some deviation due to an influence of an algorithm using a random number, which is the MCMC method, the minimum energy and the minimum temperature at which the average energy is minimized are relatively close values. In FIG. 3A, a region 15a indicates a region where the minimum energy is the smallest, and in FIG. 3B, regions 15b1 and 15b2 indicate regions where the average energy is the smallest.

Also in FIGs. 4A and 4B, the contour diagram of the minimum energy and the contour diagram of the average energy in the minimum temperature replica are similar to each other. In FIG. 4A, a region 16a indicates a region where the minimum energy is the smallest, and in FIG. 4B, regions 16b1 to 16b10 indicate regions where the average energy is the smallest.

At the minimum temperature at which the minimum energy becomes smaller, it is considered that an appearance probability of a state in which energy is further lowered in the minimum temperature replica is high. For this reason, it is considered that the average energy in the minimum temperature replica is also decreased at the minimum temperature, and the similarity as described above is generated. As illustrated in FIG. 4B, the average energy does not depend much on the maximum temperature.

As described above, the average energy of the minimum temperature replica changes in a manner similar to that of the minimum energy with respect to the minimum temperature. For this reason, it is possible to adjust the optimum minimum temperature for obtaining smaller minimum energy based on the average energy of the minimum temperature replica.

The minimum energy at a certain minimum temperature is not obtained until the solution search processing ends. For this reason, in a case where the minimum temperature is adjusted based on the obtained minimum energy, the solution search processing has to be repeated using various minimum temperatures, and it takes time to appropriately adjust the minimum temperature. By contrast, the average energy of the minimum temperature replica may be obtained during the solution search processing. For this reason, the adjustment time may be shortened by adjusting the minimum temperature based on the average energy of the minimum temperature replicas acquired a plurality of times during the solution search processing.

Since the constraint of the solution to the local solution by the replica exchange is suppressed, by setting the adjustment cycle to the predetermined number of times of replica exchange, it is possible to appropriately adjust the minimum temperature in consideration of a wide search space.

(Second Embodiment)

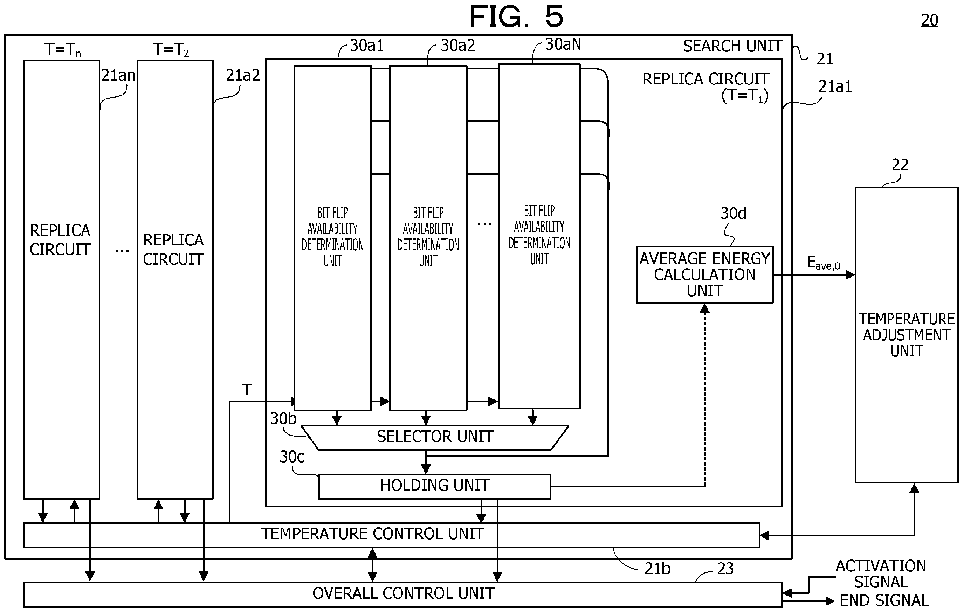

FIG. 5 is a diagram illustrating an example of a data processing apparatus according to a second embodiment.

A data processing apparatus 20 according to the second embodiment includes a search unit 21, a temperature adjustment unit 22, and an overall control unit 23. The search unit 21 is an example of the search unit 12 illustrated in FIG. 1, and the temperature adjustment unit 22 and the overall control unit 23 are examples of the processing unit 13 illustrated in FIG. 1. An element corresponding to the storage unit 11 illustrated in FIG. 1 is not illustrated.

For example, the search unit 21 may be implemented by using an electronic circuit such as an ASIC or an FPGA. For example, the temperature adjustment unit 22 and the overall control unit 23 may be implemented by software processing in which a processor such as a CPU executes a program. The implementation is not limited to this, and a part or entirety of each of the search unit 21, the temperature adjustment unit 22, and the overall control unit 23 may be implemented by using an electronic circuit as described above. A part or entirety of each of the search unit 21, the temperature adjustment unit 22, and the overall control unit 23 may be implemented by software processing.

In the data processing apparatus 20 according to the second embodiment, the search unit 21 searches for a solution to an optimization problem by a replica exchange method in which states are exchanged between replicas.

For example, as illustrated in FIG. 5, the search unit 21 includes replica circuits 21a1, 21a2, ..., and 21an corresponding to n replicas. The search unit 21 includes a temperature control unit 21b.

Temperature values ($T_1$ to $T_n$) different from each other are set for the replica circuits 21a1 to 21an. $T_1$ is set for the replica circuit 21a1, $T_2$ is set for the replica circuit 21a2, and $T_n$ is set for the replica circuit 21an. $T_1 < T_2 < ... < T_n$. For this reason, a replica 1 corresponding to the replica circuit 21a1 is a minimum temperature replica.

For example, the initial $T_1$ to $T_n$ are determined based on the following Expressions (5) and (6), based on a maximum temperature ($T_{max}$) and a minimum temperature ($T_{min}$) given in advance.

$$T_i = T_{min} \cdot exp\left(\frac{i-1}{denom}\right) \qquad (3)$$

$$denom = \frac{n-1}{\log\left(\dfrac{T_{max}}{T_{min}}\right)} \qquad (4)$$

In Expression (3), $T_i$ is a temperature value set for the i-th replica circuit among the replica circuits 21a1 to 21an. In Expression (4), n is the number of replicas.

Each of the replica circuits 21a1 to 21an implements solution search based on the energy function represented by Expression (1) by using, for example, a circuit as described below.

The replica circuit 21a1 corresponding to the replica 1 includes bit flip availability determination units 30a1, 30a2, ..., and 30aN, a selector unit 30b, a holding unit 30c, and an average energy calculation unit 30d.

Processing of determining availability of flipping each bit included in the state of the replica 1 and flipping any bit determined to be flippable corresponds to one-time processing of the MCMC processing by the replica circuit 21a1. The one-time processing is repeatedly executed.

Each of the bit flip availability determination units 30a1 to 30aN is, for example, an arithmetic processing circuit that determines availability of flipping related to one bit handled by each of the bit flip availability determination units 30a1 to 30aN. The bit flip availability determination units 30a1 to 30aN perform the above-described determination processing in parallel.

When a value of a bit (state variable $x_i$) with index = i changes to $1 - x_i$, a change amount of $x_i$ is represented as $\delta x_i = (1 - x_i) - x_i = 1 - 2x_i$. Accordingly, the energy change amount ($\Delta E_i$) accompanied by the change in the value of $x_i$ may be represented by the following Expression (5) from Expression (1).

$$\begin{aligned} \Delta E_i &= E(\boldsymbol{x})\Big|_{x_i \to 1-x_i} - E(\boldsymbol{x}) \\ &= -\delta x_i \left(\sum_j W_{ij}x_j + b_i\right) \\ &= -\delta x_i h_i \\ &= \begin{cases} -h_i & for\ x_i = 0{\to}1 \\ +h_i & for\ x_i = 1{\to}0 \end{cases} \end{aligned} \qquad (5)$$

In Expression (5), $h_i$ is referred to as a local field.

$$h_i = \sum_j W_{ij}x_j + b_i \qquad (6)$$

Each of the bit flip availability determination units 30a1 to 30aN holds $h_i$ for $x_i$, and obtains, from $h_i$, $\Delta E_i$ in a case where the value of $x_i$ is changed, based on Expression (5).

Hereinafter, the bit flip availability determination unit 30a1 will be mainly described as an example. The bit flip availability determination units 30a2 to 30aN having the configuration of the same name have the same function.

The bit handled by the bit flip availability determination unit 30a1 is referred to as an own bit, and the bits handled by the bit flip availability determination units 30a2 to 30aN are referred to as other bits.

The bit flip availability determination unit 30a1 stores weight coefficients ($W_{1j}$ (j = 1 to N)) between the own bit and the other bits. A subscript "j" of $W_{1j}$ indicates index of one of the bits including the own bit (bit with index = 1). $W_{11} = 0$.

The bit flip availability determination unit 30a1 uses $W_{1j}$ to calculate $h_1$ based on Expression (6).

By using $h_1$, the bit flip availability determination unit 30a1 generates $\Delta E_1$ generated in a case where the own bit is flipped, based on Expression (5). For example, the bit flip availability determination unit 30a1 may determine whether the value of the own bit changes to 0 or 1 from a current value of the own bit supplied from the holding unit 30c. The bit flip availability determination unit 30a1 outputs the generated $\Delta E_1$ to the selector unit 30b.

The bit flip availability determination unit 30a1 determines availability of flipping the own bit, based on the comparison result between $\Delta E_1$ and a thermal noise value. As the thermal noise value, for example, $T_1 \cdot \log(u)$ may be used. $T_1$ is a temperature value set for the replica circuit 21a1, and u is a uniform random number taking a value from 0 to 1. The bit flip availability determination unit 30a1 permits the flip when, for example, $-\Delta E_1 \geq T \cdot \log(u)$.

The selector unit 30b receives the determination result of the flip availability output by each of the bit flip availability determination units 30a1 to 30aN. When there are a plurality of bits determined to be flippable, the selector unit 30b selects one of the plurality of bits randomly or according to a predetermined rule. When there is a bit determined to be flippable, the selector unit 30b outputs an index of the selected bit, an instruction signal for instructing flipping, and an energy change amount ($\Delta E$) in a case where the bit is flipped. The index, the instruction signal, and $\Delta E$ are supplied to the holding unit 30c. The index is further supplied to each of the bit flip availability determination units 30a1 to 30aN.

For example, the holding unit 30c includes a register and holds the state of the replica 1 and $\Delta E$ output by the selector unit 30b. In a case where the holding unit 30c receives an instruction signal for instructing flipping, the holding unit 30c flips the bit designated by the index output by the selector unit 30b. The holding unit 30c outputs the state of the replica 1 when the search processing in the replica circuit 21a1 is completed a predetermined number of times or for a predetermined period to the temperature adjustment unit 22 and the overall control unit 23.

The average energy calculation unit 30d calculates average energy ($E_{ave, 0}$) of the minimum temperature replica. $E_{ave, 0}$ is supplied to the temperature adjustment unit 22. For example, the average energy calculation unit 30d holds an initial value of energy represented by Expression (1), and updates $E_{ave, 0}$ by using $\Delta E$ output by the selector unit 30b and held by the holding unit 30c every time the MCMC processing is repeated. In a case where none of the bits is set to be flippable, $\Delta E = 0$.

Although the replica circuits 21a2 to 21an corresponding to replicas 2 to n may also be implemented by a circuit configuration similar to that of the replica circuit 21a1, the replica circuits 21a2 to 21an may not include the average energy calculation unit 30d.

The temperature control unit 21b sets $T_1$ to $T_n$ in the bit flip availability determination units 30a1 to 30aN included in each of the replica circuits 21an to 21a1. When $T_{min}$ is changed by the temperature adjustment unit 22, the temperature control unit 21b updates $T_1$ to $T_n$ in accordance with Expressions (3) and (4) based on $T_{max}$ set in advance and $T_{min}$ after the change, and sets new $T_1$ to $T_n$ in the replica circuits 21a1 to 21an.

The temperature control unit 21b controls the exchange of the states ($X_1$ to $X_n$) of each of the replicas in the replica circuits 21a1 to 21an. Based on the exchange probability ($p_{ij}$) represented by Expression (2) described above, the temperature control unit 21b determines whether to exchange states for each pair of replica circuits having adjacent temperature values. For obtaining $E_i$ and $E_j$ of Expression (2), the temperature control unit 21b holds, for example, an initial value of energy of each replica, and updates the energy of each replica based on $\Delta E$ held in the holding unit 30c of the replica circuits 21a1 to 21an. Each of the replica circuits 21a1 to 21an may include an energy calculation unit that calculates energy of a replica for which the replica circuit itself is responsible for processing.

When exchanging the states of the replica i and the replica j, the temperature control unit 21b sets $X_i$, which is the state of the replica i, in the replica circuit corresponding to the replica j, and sets $X_j$, which is the state of the replica j, in the replica circuit corresponding to the replica i.

Every time replica exchange is performed a predetermined number of times, the temperature adjustment unit 22 acquires $E_{ave, 0}$, which is the average energy of the minimum temperature replica, and adjusts $T_{min}$ based on a comparison result between $E_{ave, 0}$ and $e_{ave, old}$, which is $E_{ave, 0}$ acquired last time. An example of the temperature adjustment unit 22 will be described later.

The overall control unit 23 controls overall operations of the data processing apparatus 20. Upon receiving input of an activation signal from an outside of the data processing apparatus 20, the overall control unit 23 outputs the activation signal to the temperature control unit 21b, activates the search unit 21, and starts the search processing for the solution to the optimization problem. When the search processing by the search unit 21 ends, the overall control unit 23 acquires $X_1$ to $X_n$ from the search unit 21 and obtains the solution for the optimization problem. For example, the overall control unit 23 sets, as the solution, the state corresponding to the minimum energy among the acquired $X_1$ to $X_n$. The overall control unit 23 outputs an end signal indicating an end of the arithmetic operation to the outside of the data processing apparatus 20. The end signal may include information indicating the solution obtained by the arithmetic operation. For example, the overall control unit 23 may output image information indicating the solution to a display apparatus (not illustrated) coupled to the data processing apparatus 20 and causes the display apparatus to display the image information indicating the solution to present details of the obtained solution to the user.

The overall control unit 23 may receive problem information ($W_{ij}$ or $b_i$) described above stored in a storage unit (not illustrated), an initial value of the state, and the like, and may set them in each unit of the search unit 21. The setting of these pieces of information may be performed by another control unit. Upon receiving input of a reset signal from the outside of the data processing apparatus 20, the overall control unit 23 clears information held by the search unit 21 and the temperature adjustment unit 22.

$T_{max}$ is obtained by, for example, the following calculation method.

A predetermined number of times of MCMC processing using replica exchange is performed by the search unit 21 in a state where each temperature value from $T_{min}$ to $T_{max}$ is fixed, and a state (hereafter, referred to as a local solution) corresponding to the minimum energy obtained in each of the replica circuits 21a1 to 21an is acquired. From the plurality of acquired local solutions, for example, two local solutions are selected in ascending order of energy. The processing of calculating $\Delta E$ caused when the value of one of a plurality of bits of a bit sequence of one of the selected local solutions, which are different from those of the bit sequence of the other local solution, is changed on each of the plurality of bits. In a case where an increase in energy occurs continuously a plurality of times, a total value of the energies increased in the plurality of times is calculated. Based on the total value, a new $T_{max}$ is determined by, for example, the following Expression (7).

$$T_{max} = -\frac{Dsum}{log(A)} \tag{7}$$

As described above, in a case where an increase in energy occurs continuously a plurality of times, Dsum is a total value of energies increased in the plurality of times. A is a parameter indicating a transition probability of accepting the state transition that causes the maximum energy increase, and is set in advance.

Even in a case where there is a large mountain of energy that may not be crossed unless a plurality of continuous energy increases occur between the two local solutions, the use of $T_{max}$ described above allows crossing of the energy mountain at a relatively high probability.

(Example of Temperature Adjustment Unit 22)

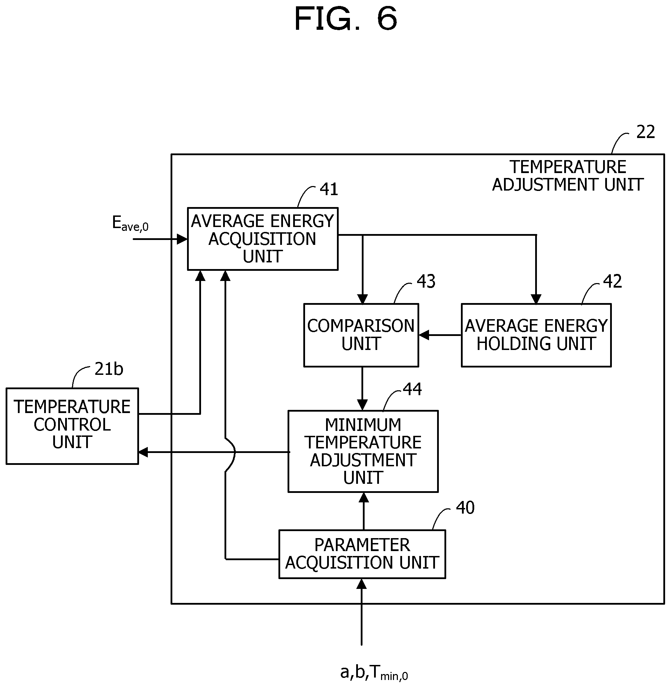

FIG. 6 is a diagram illustrating an example of a temperature adjustment unit.

The temperature adjustment unit 22 includes a parameter acquisition unit 40, an average energy acquisition unit 41, an average energy holding unit 42, a comparison unit 43, and a minimum temperature adjustment unit 44.

For example, the parameter acquisition unit 40 acquires a division number a, an adjustment cycle b, and $T_{min, 0}$, which is a lower limit value of $T_{min}$, input by a user. The division number a is a division number between $T_{min, 0}$ and $T_{max}$ for determining a candidate values of $T_{min}$. A lower limit of a candidate values of $T_{min}$ is $T_{min, 0}$, and an upper limit is a candidate value of a division point that is one immediately below $T_{max}$. The adjustment cycle b is represented by the number of times of replica exchange. For example, every time the replica exchange is performed b times, adjustment of $T_{min}$ is performed.

Every time the replica exchange is performed b times, the average energy acquisition unit 41 acquires $E_{ave, 0}$, which is the average energy of the minimum temperature replica. For example, the average energy acquisition unit 41 acquires information indicating whether the replica exchange has been performed from the temperature control unit 21b.

The average energy holding unit 42 holds $E_{ave, 0}$ acquired by the average energy acquisition unit 41 as $e_{ave, old}$.

The comparison unit 43 outputs a comparison result between $E_{ave, 0}$ acquired this time and $e_{ave, old}$, which is $E_{ave, 0}$ acquired last time, held in the average energy holding unit 42.

Based on the above-described comparison result, the minimum temperature adjustment unit 44 adjusts $T_{min}$. Based on the division number a, $T_{min, 0}$, and $T_{max}$, the minimum temperature adjustment unit 44 calculates the above-described a candidate values having a plurality of steps of magnitude based on the division number a. For example, the minimum temperature adjustment unit 44 sets the smallest $T_{min, 0}$ among a candidate values as an initial value of $T_{min}$. When $E_{ave, 0} < e_{ave, old}$, the minimum temperature adjustment unit 44 changes $T_{min}$ to a candidate value larger than the current $T_{min}$ by one step among a candidate values. When $E_{ave, 0} \geq e_{ave, old}$, the minimum temperature adjustment unit 44 changes $T_{min}$ to a candidate value smaller than the current $T_{min}$ by one step among a candidate values. However, when $E_{ave, 0} < e_{ave, old}$, the minimum temperature adjustment unit 44 does not change $T_{min}$ in a case where the current $T_{min}$ is a candidate value closest to $T_{max}$, for example, the upper limit of a candidate values. When $E_{ave, 0} \geq e_{ave, old}$, the minimum temperature adjustment unit 44 does not change $T_{min}$ in a case where the current $T_{min}$ is $T_{min, 0}$, for example, the lower limit of a candidate values.

According to the above-described adjustment method, adjustment may be performed with a small number of parameters, but the adjustment method is not limited to the above-described adjustment method. For example, after the minimum temperature adjustment unit 44 changes $T_{min}$ to the candidate value smaller than the current candidate value by one step, in a case where $E_{ave, 0} \geq e_{ave, old}$ is also set for $E_{ave, 0}$ acquired next, the minimum temperature adjustment unit 44 may change $T_{min}$ to a candidate value larger than the current candidate value by one step. This is because, there is a possibility that further lower energy may be obtained by increasing $T_{min}$.

The minimum temperature adjustment unit 44 may set the initial value of $T_{min}$ as the upper limit among a candidate values. In this case, when $E_{ave, 0} < e_{ave, old}$, the minimum temperature adjustment unit 44 changes $T_{min}$ to a candidate value smaller than the current candidate value by one step among a candidate values. When $E_{ave, 0} \geq e_{ave, old}$, the minimum temperature adjustment unit 44 changes $T_{min}$ to a candidate value larger than the current candidate value by one step among a candidate values. However, when $E_{ave, 0} \geq e_{ave, old}$, the minimum temperature adjustment unit 44 does not change $T_{min}$ in a case where the current $T_{min}$ is the upper limit of a candidate values. When $E_{ave, 0} < e_{ave, old}$, and in a case where the current $T_{min}$ is the lower limit of a candidate values, the minimum temperature adjustment unit 44 does not change $T_{min}$.

The minimum temperature adjustment unit 44 sets $T_{min}$ adjusted as described above in the search unit 21.

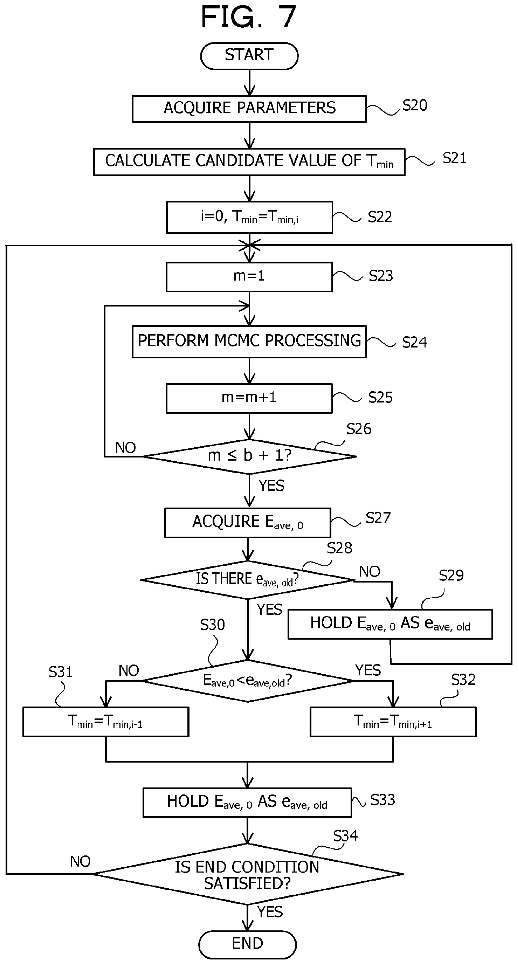

FIG. 7 is a flowchart illustrating a flow of an example of an adjustment procedure of a minimum temperature.

For example, the following processing is performed under the control of the overall control unit 23.

As parameters for adjusting $T_{min}$, the temperature adjustment unit 22 acquires the division number a, the adjustment cycle b, and $T_{min, 0}$, which is a lower limit value of $T_{min}$ (step S20).

Based on the division number a, $T_{min, 0}$, and $T_{max}$, the temperature adjustment unit 22 calculates a candidate values described above (step S21).

The temperature adjustment unit 22 sets i = 0 and $T_{min} = T_{min, i}$ (step S22), and further initializes m indicating the number of times of replica exchange to m = 1 (step S23).

After that, the MCMC processing is performed in the search unit 21 (step S24). Accordingly, the state of each replica is updated in accordance with the acceptance probability of a predetermined state transition.

The temperature adjustment unit 22 sets m = m + 1 (step S25), and determines whether $m \leq b + 1$ (step S26). b represents an adjustment cycle of $T_{min}$. When it is not determined that $m \leq b + 1$, the processing from step S24 is repeated.

When it is determined that $m \leq b + 1$, the temperature adjustment unit 22 acquires $E_{ave, 0}$, which is the average energy of the minimum temperature replica, from the search unit 21 (step S27).

The temperature adjustment unit 22 determines whether there is $e_{ave, old}$ in the average energy holding unit 42 (step S28).

When it is determined that there is no $e_{ave, old}$ in the average energy holding unit 42, the temperature adjustment unit 22 causes the average energy holding unit 42 to hold the currently acquired $E_{ave, 0}$ as $e_{ave, old}$ (step S29). After the processing of step S29, processing from step S23 is repeated.

When it is determined that there is $e_{ave, old}$ in the average energy holding unit 42, the temperature adjustment unit 22 determines whether $E_{ave, 0} < e_{ave, old}$ (step S30).

When it is not determined that $E_{ave, 0} < e_{ave, old}$, the temperature adjustment unit 22 changes $T_{min}$ to $T_{min} = T_{min, i-1}$ (step S31). $T_{min, i-1}$ is a candidate value smaller than $T_{min, i}$, which is the current candidate value by one step among a candidate values. When $T_{min, i} = T_{min, 0}$, $T_{min}$ is not changed.

When it is determined that $E_{ave, 0} < e_{ave, old}$, the temperature adjustment unit 22 changes $T_{min}$ to $T_{min} = T_{min, i+1}$ (step S32). $T_{min, i+1}$ is a candidate value that is larger than $T_{min, i}$, which is the current candidate value by one step, among a candidate values. When $T_{min, i}$ is the upper limit of the candidate value, $T_{min}$ is not changed.

In the processing of steps S31 and S32 described above, the temperature adjustment unit 22 sets a new $T_{min}$ in the search unit 21.

After processing of steps S31 and S32, the temperature adjustment unit 22 causes the average energy holding unit 42 to hold $E_{ave, 0}$ acquired this time as $e_{ave, old}$ (step S33).

After that, for example, the overall control unit 23 determines whether a predetermined end condition is satisfied (step S34). For example, when the number of times of MCMC processing reaches a predetermined number of times, the overall control unit 23 determines that the end condition is satisfied. Although not illustrated, for example, in a case where it is determined that the end condition is satisfied, the overall control unit 23 acquires $X_1$ to $X_n$ from the search unit 21, outputs a state corresponding to the minimum energy among $X_1$ to $X_n$ as a solution, and ends the search processing.

When the overall control unit 23 determines that the predetermined end condition is not satisfied, the processing from step S23 is repeated.

The procedure of the processing described above is an example, and the procedure may be appropriately changed.

The data processing apparatus 20 according to the second embodiment described above produces similar effects to those of the data processing apparatus 10 according to the first embodiment. For example, by adjusting $T_{min}$ based on $E_{ave, 0}$ acquired a plurality of times during the solution search processing, the search processing does not have to be repeated, and the adjustment time may be shortened.

(Experimental Example)

Hereinafter, calculation results of two types of optimization problems used to obtain the contour diagrams of FIGs. 3A, 3B, 4A, and 4B by the data processing apparatus 20 as illustrated in FIG. 5 will be described. $T_{max}$ to be used is calculated in advance by the calculation method using Expression (7) described above.

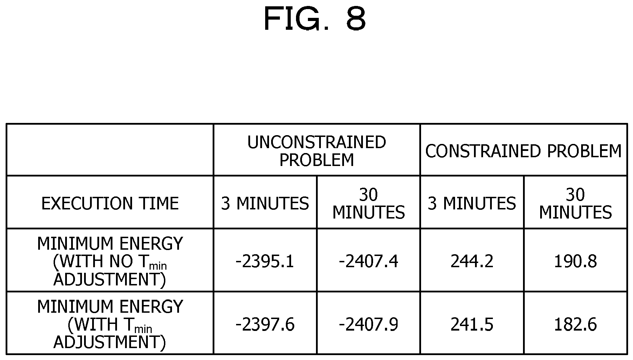

FIG. 8 is a diagram illustrating an example of a calculation result of minimum energy.

An unconstrained problem to be calculated is the G39 of Gset, which is the benchmark problem of the maximum cut problem used to obtain the contour diagrams in FIGs. 3A and 3B. The number of state variables included in the evaluation function used for the calculation is N = 2000, and the number of replicas is 80. A constrained problem to be calculated is an optimization problem having a 1-Way 1-hot constraint and a linear inequality constraint, which is used to obtain the contour diagrams of FIGs. 4A and 4B. The number of state variables included in the evaluation function used for the calculation is N = 8750, and the number of replicas is 80. All the problems have been calculated with execution times of 3 minutes and 30 minutes.

As illustrated in FIG. 7, in a case where $T_{min}$ is adjusted, the minimum energy is smaller than in a case where $T_{min}$ is not adjusted in any of the problems and the execution times, and a better solution is obtained than in a case where $T_{min}$ is not adjusted.

(Third Embodiment)

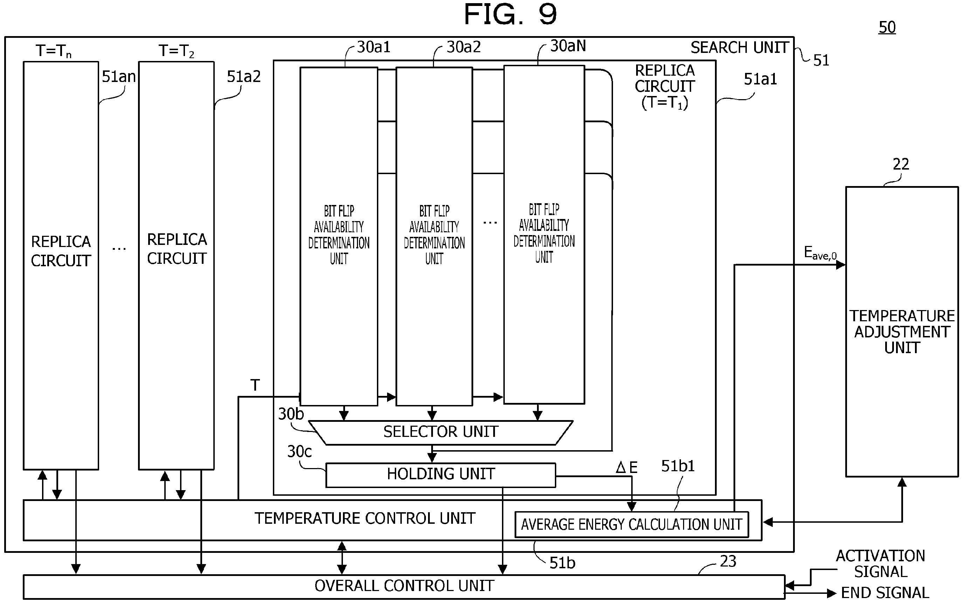

FIG. 9 is a diagram illustrating an example of a data processing apparatus according to a third embodiment. In FIG. 9, the same elements as the elements illustrated in FIG. 5 are denoted by the same reference signs.

Unlike the search unit 21 of the data processing apparatus 20 according to the second embodiment, in a data processing apparatus 50 according to the third embodiment, a search unit 51 searches for a solution to an optimization problem by a replica exchange method in which temperature values are exchanged between replicas. In this case, the temperature values set for replica circuits 51a1, 51a2, ..., and 51an corresponding to the replicas 1 to n are not fixed. For this reason, the replica circuit that performs the processing of the minimum temperature replica is not fixed to the replica circuit 51a1. Accordingly, an average energy calculation unit 51b1 that calculates $E_{ave, 0}$, which is the average energy of the minimum temperature replica, is provided in a temperature control unit 51b instead of the replica circuits 51a1 to 51an.

First, the temperature control unit 51b sets $T_1$ to $T_n$ in the bit flip availability determination units 30a1 to 30aN included in each of the replica circuits 51a1 to 51an. When $T_{min}$ is changed by the temperature adjustment unit 22, the temperature control unit 51b updates $T_1$ to $T_n$ in accordance with Expressions (3) and (4) based on $T_{max}$ set in advance and $T_{min}$ after the change, and sets new $T_1$ to $T_n$ in the replica circuits 51a1 to 51an.

The temperature control unit 51b controls exchange of $T_1$ to $T_n$ set in the replica circuits 51a1 to 51an. Based on the exchange probability ($p_{ij}$) represented by Expression (2) described above, the temperature control unit 51b determines whether to exchange temperature values for each pair of replica circuits having adjacent temperature values. For obtaining $E_i$ and $E_j$ of Expression (2), the temperature control unit 21b holds, for example, an initial value of energy of each replica, and updates the energy of each replica based on $\Delta E$ held in the holding unit 30c of the replica circuits 51a1 to 51an.

When the temperature control unit 51b exchanges the states of the replica i and the replica j, the temperature control unit 51b sets $T_i$ set in the replica circuit corresponding to the replica i in the replica circuit corresponding to the replica j. The temperature control unit 51b sets $T_j$ set in the replica circuit corresponding to the replica j in the replica circuit corresponding to the replica i.

The average energy calculation unit 51b1 provided in the temperature control unit 51b calculates the average energy ($E_{ave, 0}$) of the minimum temperature replica. $E_{ave, 0}$ is supplied to the temperature adjustment unit 22. For example, the average energy calculation unit 51b1 holds an initial value of energy, and updates $E_{ave, 0}$ by using $\Delta E$ that is output by the selector unit 30b of the replica circuit corresponding to the minimum temperature replica and is held by the holding unit 30c every time the MCMC processing is repeated. When the minimum temperature replica is changed by replica exchange, the average energy calculation unit 51b1 continuously updates $E_{ave, 0}$ by using $\Delta E$ in the replica circuit corresponding to the changed minimum temperature replica.

For example, the search unit 51 may be implemented by using an electronic circuit such as an ASIC or an FPGA. A part or entirety of the search unit 51 may be implemented by software processing, without being limited to this.

Even when such a search unit 51 is used, the data processing apparatus 50 may obtain the same effects as those of the data processing apparatus 50 according to the second embodiment. By exchanging temperature values instead of exchanging states between replicas, an amount of data to be moved at the time of replica exchange may be reduced.

As described above, the average energy calculation unit 51b1 may be provided in the overall control unit 23 instead of the temperature control unit 51b, or may be provided independently of the replica circuits 51a1 to 51an, the temperature control unit 51b, the overall control unit 23, and the like.

(Example of Implementation by Computer)

Details of the above-described processing (for example, FIG. 2 or 7) performed by the data processing apparatuses 10, 20, and 50 illustrated in FIGs. 1, 5, and 9 may be implemented by software by causing a computer as described below to execute a program.

The program may be recorded on a computer-readable recording medium. As the recording medium, for example, a magnetic disk, an optical disk, a magneto-optical disk, a semiconductor memory, or the like may be used. Examples of the magnetic disk include a flexible disk (FD) and an HDD. Examples of the optical disk include a compact disc (CD), a CD-recordable (R)/rewritable (RW), a Digital Versatile Disc (DVD), and a DVD-R/RW. The program may be recorded on a portable-type recording medium and distributed. In such a case, the program may be copied from the portable-type recording medium to another recording medium and executed.

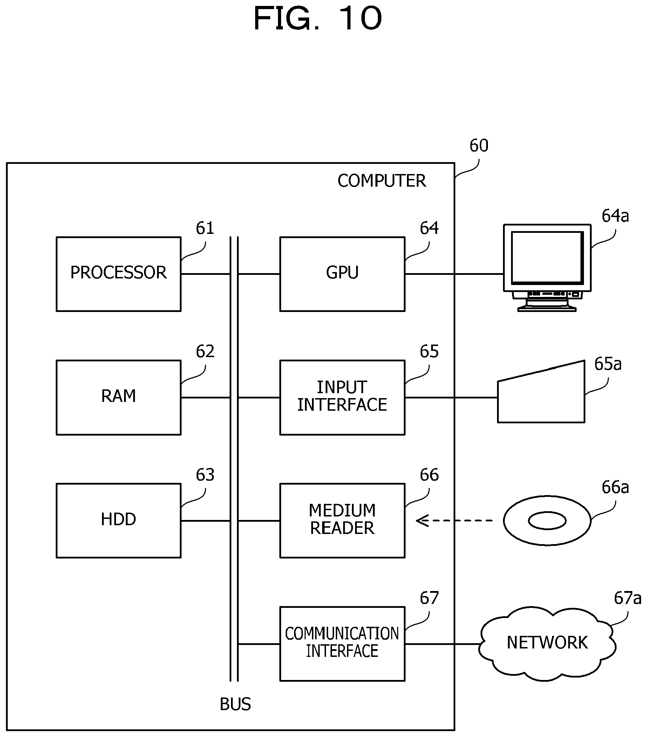

FIG. 10 is a diagram illustrating an example of hardware of a computer that is an example of the data processing apparatus.

A computer 60 includes a processor 61, a RAM 62, an HDD 63, a GPU 64, an input interface 65, a medium reader 66, and a communication interface 67. The units described above are coupled to a bus.

For example, the processor 61 may function as the search unit 12 and the processing unit 13 in FIG. 1, and the search units 21 and 51, the temperature adjustment unit 22, and the overall control unit 23 in FIGs. 5 and 9. The processor 61 is a processor such as a GPU or a CPU including an arithmetic circuit for executing instructions of a program and a storage circuit such as a cache memory. The processor 61 loads at least a part of a program or data stored in the HDD 63 into the RAM 62, and executes the program. For example, as illustrated in FIGs. 5 and 9, the processor 61 may include a plurality of processor cores in order to execute the functions of the replica circuits 21a1 to 21an and 51a1 to 51an in parallel. The computer 60 may include a plurality of processors. A set of the plurality of processors (multiprocessor) may be referred to as a "processor".

For example, the RAM 62 functions as the storage unit 11 illustrated in FIG. 1. The RAM 62 is a volatile semiconductor memory that temporarily stores the program to be executed by the processor 61 and data to be used for the arithmetic operation by the processor 61. The computer 60 may include a type of memory other than the RAM 62 and may include a plurality of memories.

The HDD 63 is a non-volatile storage apparatus that stores data as well as programs of software such as an operating system (OS), middleware, and application software. Examples of the program include a program for causing the computer 60 to execute processing of searching for a solution to the optimization problem and adjustment processing of $T_{min}$ as described above. The computer 60 may include other types of storage apparatuses such as a flash memory or a solid-state drive (SSD) and may include a plurality of non-volatile storage apparatuses.

According to an instruction from the processor 61, the GPU 64 outputs an image (for example, an image representing a search result or the like of the solution to the optimization problem) to a display 64a coupled to the computer 60. As the display 64a, a cathode ray tube (CRT) display, a liquid crystal display (LCD), a plasma display panel (PDP), an organic electro-luminescence (OEL) display, or the like may be used.

The input interface 65 acquires an input signal from an input device 65a coupled to the computer 60 and outputs the input signal to the processor 61. As the input device 65a, a pointing device such as a mouse, a touch panel, a touch pad, or a trackball, a keyboard, a remote controller, a button switch, and the like may be used. A plurality of types of input devices may be coupled to the computer 60.

The medium reader 66 is a reading apparatus that reads a program or data recorded on a recording medium 66a. As the recording medium 66a, for example, a magnetic disk, an optical disk, a magneto-optical disk (MO), a semiconductor memory, or the like may be used. Examples of the magnetic disk include an FD and an HDD. Examples of the optical disk include a CD and a DVD.

For example, the medium reader 66 copies a program or data read from the recording medium 66a to another recording medium such as the RAM 62 or the HDD 63. For example, the read program is executed by the processor 61. The recording medium 66a may be a portable-type recording medium or may be used to distribute the program or data. The recording medium 66a or the HDD 63 may be referred to as a computer-readable recording medium.

The communication interface 67 is an interface that is coupled to a network 67a and communicates with another information processing apparatus via the network 67a. The communication interface 67 may be a wired communication interface coupled to a communication apparatus such as a switch via a cable or may be a wireless communication interface coupled to a base station via a wireless link.

An accelerator card including an electronic circuit such as an FPGA or an ASIC may be coupled to the bus of the computer 60. The processing of the search units 12, 21, and 51 may be executed by the accelerator card.

Although aspects of the temperature adjustment program, the data processing apparatus, and the data processing method of the present disclosure have been described thus far based on the embodiments, these are merely examples and are not limited to the above description.

**Claims**

1. A temperature adjustment program that causes a computer to execute a process, the process comprising:

   acquiring an average value of values of an evaluation function obtained in search processing of a solution to an optimization problem by a replica circuit to which a minimum temperature value is set among a plurality of replica circuits a plurality of times during the search processing by a replica exchange method by using the plurality of replica circuits corresponding to a plurality of replicas of the evaluation function based on an Ising model obtained by converting the optimization problem;
   changing the minimum temperature value based on a comparison result between a first average value among the average values acquired the plurality of times and a second average value acquired before the first average value; and
   setting the minimum temperature value after the change.

2. The temperature adjustment program according to claim 1, wherein the process further comprising
   acquiring the average value every time replica exchange is performed a certain number of times during the search processing.

3. The temperature adjustment program according to claim 1, wherein the process further comprising:

   dividing a range between a lower limit value of the minimum temperature value and a maximum temperature value by a certain division number; and
   acquiring a plurality of candidate values of the minimum temperature value having a plurality of steps of magnitude based on the division number.

4. The temperature adjustment program according to claim 3, wherein the process further comprising:

   when the lower limit value is set as an initial value of the minimum temperature value, changing, when the first average value is smaller than the second average value, the minimum temperature value to a candidate value that is larger than the current minimum temperature value by one step among the plurality of candidate values; and
   changing, when the first average value is equal to or larger than the second average value, the minimum temperature value to a candidate value that is smaller than the current minimum temperature value by one step among the plurality of candidate values.

5. The temperature adjustment program according to claim 1, wherein the process further comprising:

   exchanging states of the plurality of replicas between the plurality of replica circuits based on a predetermined exchange probability; and
   acquiring, among the plurality of replica circuits, the average value by using the set minimum temperature value.

6. The temperature adjustment program according to claim 1, wherein the process further comprising:

   exchanging a plurality of temperature values set for the plurality of replica circuits based on a certain exchange probability; and
   acquiring the average value based on a change amount of a value of the evaluation function during the search processing supplied from the replica circuit to which the minimum temperature value is set.

7. A data processing apparatus comprising:

   a search unit configured to perform search processing for a solution to an optimization problem by a replica exchange method by using a plurality of replica circuits corresponding to a plurality of replicas of an evaluation function based on an Ising model obtained by converting the optimization problem; and
   a processing unit configured to acquire an average value of values of the evaluation function obtained in the search processing by a replica circuit to which a minimum temperature value is set among the plurality of replica circuits a plurality of times during the search processing from the search unit, change the minimum temperature value based on a comparison result between a first average value among the average values acquired the plurality of times and a second average value acquired before the first average value, and set the minimum temperature value after the change in the search unit.

8. A temperature adjustment method for a computer to execute a process comprising:

acquiring an average value of values of an evaluation function obtained in search processing of a solution to an optimization problem by a replica circuit to which a minimum temperature value is set among a plurality of replica circuits a plurality of times during the search processing by a replica exchange method by using the plurality of replica circuits corresponding to a plurality of replicas of the evaluation function based on an Ising model obtained by converting the optimization problem;
changing the minimum temperature value based on a comparison result between a first average value among the average values acquired the plurality of times and a second average value acquired before the first average value; and
setting the minimum temperature value after the change.

9. The temperature adjustment method according to claim 8, wherein the process further comprising
acquiring the average value every time replica exchange is performed a certain number of times during the search processing.

10. The temperature adjustment method according to claim 8, wherein the process further comprising:

dividing a range between a lower limit value of the minimum temperature value and a maximum temperature value by a certain division number; and
acquiring a plurality of candidate values of the minimum temperature value having a plurality of steps of magnitude based on the division number.

11. The temperature adjustment method according to claim 10, wherein the process further comprising:

when the lower limit value is set as an initial value of the minimum temperature value,

changing, when the first average value is smaller than the second average value, the minimum temperature value to a candidate value that is larger than the current minimum temperature value by one step among the plurality of candidate values;
and
changing, when the first average value is equal to or larger than the second average value, the minimum temperature value to a candidate value that is smaller than the current minimum temperature value by one step among the plurality of candidate values.

12. The temperature adjustment method according to claim 8, wherein the process further comprising:

exchanging states of the plurality of replicas between the plurality of replica circuits based on a predetermined exchange probability; and
acquiring, among the plurality of replica circuits, the average value by using the set minimum temperature value.

13. The temperature adjustment method according to claim 8, wherein the process further comprising:

exchanging a plurality of temperature values set for the plurality of replica circuits based on a certain exchange probability; and
acquiring the average value based on a change amount of a value of the evaluation function during the search processing supplied from the replica circuit to which the minimum temperature value is set.

# FIG. 1

# FIG. 2

START

IS IT MINIMUM TEMPERATURE ADJUSTMENT CYCLE? — S10 — NO

YES

ACQUIRE AVERAGE ENERGY OF MINIMUM TEMPERATURE REPLICA — S11

COMPARE WITH AVERAGE ENERGY ACQUIRED LAST TIME — S12

CHANGE MINIMUM TEMPERATURE — S13

SET MINIMUM TEMPERATURE IN SEARCH UNIT — S14

END

# FIG. 3A

# FIG. 3B

# FIG. 4A

16a

MAXIMUM TEMPERATURE

10

1

0.1

$E_{min}$:
LARGE

$E_{min}$:
SMALL

$E_{min}$:
LARGE

0.1    0.12    0.14    0.16    0.18    0.2    0.22    0.24  0.26  0.28  0.3

MINIMUM TEMPERATURE

# FIG. 4B

16b5    16b6        16b7   16b8   16b9  16b10

16b3

MAXIMUM
TEMPERATURE

10

1

0.1

$E_{ave}$:
LARGE

$E_{ave}$:
SMALL

$E_{ave}$:
SMALL

$E_{ave}$:
LARGE

0.1    0.12    0.14    0.16    0.18    0.2    0.22  0.24 0.26 0.28 0.3

MINIMUM
TEMPERATURE

16b2

16b1

16b4

FIG. 5

# FIG. 6

# FIG. 7

START

ACQUIRE PARAMETERS — S20

CALCULATE CANDIDATE VALUE OF $T_{min}$ — S21

$i=0$, $T_{min}=T_{min,i}$ — S22

$m=1$ — S23

PERFORM MCMC PROCESSING — S24

$m=m+1$ — S25

S26
$m \leq b + 1$? — NO

YES

ACQUIRE $E_{ave,0}$ — S27

S28
IS THERE $e_{ave,old}$? — NO — S29 HOLD $E_{ave,0}$ AS $e_{ave,old}$

YES

S30
$E_{ave,0} < e_{ave,old}$? — NO — YES

NO: S31 $T_{min}=T_{min,i-1}$

YES: S32 $T_{min}=T_{min,i+1}$

HOLD $E_{ave,0}$ AS $e_{ave,old}$ — S33

S34
IS END CONDITION SATISFIED? — NO

YES

END

# FIG. 8

| | UNCONSTRAINED PROBLEM | | CONSTRAINED PROBLEM | |
|---|---|---|---|---|
| EXECUTION TIME | 3 MINUTES | 30 MINUTES | 3 MINUTES | 30 MINUTES |
| MINIMUM ENERGY (WITH NO $T_{min}$ ADJUSTMENT) | -2395.1 | -2407.4 | 244.2 | 190.8 |
| MINIMUM ENERGY (WITH $T_{min}$ ADJUSTMENT) | -2397.6 | -2407.9 | 241.5 | 182.6 |

FIG. 9

# FIG. 10

Europäisches
Patentamt

European
Patent Office

Office européen
des brevets

# EUROPEAN SEARCH REPORT

Application Number

EP 23 19 2936

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DABIRI KEIVAN ET AL: "Replica Exchange MCMC Hardware With Automatic Temperature Selection and Parallel Trial", IEEE TRANSACTIONS ON PARALLEL AND DISTRIBUTED SYSTEMS, IEEE, USA, vol. 31, no. 7, 5 March 2020 (2020-03-05), pages 1681-1692, XP011776259, ISSN: 1045-9219, DOI: 10.1109/TPDS.2020.2972359 [retrieved on 2020-03-04] * abstract; sections 2.1, 2.2, 3, 4.2, 5 equations 3, 4 algorithm 1 * | 1-13 | INV. G06N5/01 G06F17/11 |
| A | US 2021/279652 A1 (DABIRI KEIVAN [CA] ET AL) 9 September 2021 (2021-09-09) * abstract; claims 1-20; figure 3 * | 1-13 | |
| A | US 2021/334332 A1 (KOYAMA JUMPEI [JP]) 28 October 2021 (2021-10-28) * abstract;; claims 1-11; figure 4 * | 1-13 | TECHNICAL FIELDS SEARCHED (IPC) |
| A | WILL VOUSDEN ET AL: "Dynamic temperature selection for parallel-tempering in Markov chain Monte Carlo simulations", ARXIV.ORG, CORNELL UNIVERSITY LIBRARY, 201 OLIN LIBRARY CORNELL UNIVERSITY ITHACA, NY 14853, 23 January 2015 (2015-01-23), XP081394768, DOI: 10.1093/MNRAS/STV2422 * abstract; sections 2 and 3 * | 1-13 | G06N G06F |

-/--

The present search report has been drawn up for all claims

| Place of search | Date of completion of the search | Examiner |
|---|---|---|
| The Hague | 8 February 2024 | Tebbal Barracosa, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

      .....................................................................
& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

**EP 23 19 2936**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NAVARRO CRISTÓBAL A ET AL: "Adaptive multi-GPU Exchange Monte Carlo for the 3D Random Field Ising Model", COMPUTER PHYSICS COMMUNICATION, ELSEVIER SCIENCE PUBLISHERS B.V., AMSTERDAM, NL, vol. 205, 27 April 2016 (2016-04-27), pages 48-60, XP029560587, ISSN: 0010-4655, DOI: 10.1016/J.CPC.2016.04.007 * abstract; sections 3.1, 2.4, 4 * ----- | 1-13 | |
| | | | **TECHNICAL FIELDS SEARCHED (IPC)** |

The present search report has been drawn up for all claims

| Place of search | Date of completion of the search | Examiner |
|---|---|---|
| The Hague | 8 February 2024 | Tebbal Barracosa, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................

& : member of the same patent family, corresponding document

EPO FORM 1503 03.82 (P04C01)

## EP 4 394 665 A1

### ANNEX TO THE EUROPEAN SEARCH REPORT
### ON EUROPEAN PATENT APPLICATION NO.

EP 23 19 2936

This annex lists the patent family members relating to the patent documents cited in the above-mentioned European search report.
The members are as contained in the European Patent Office EDP file on
The European Patent Office is in no way liable for these particulars which are merely given for the purpose of information.

08-02-2024

| Patent document cited in search report | Publication date | Patent family member(s) | Publication date |
|---|---|---|---|
| US 2021279652 A1 | 09-09-2021 | CN 113361185 A | 07-09-2021 |
| | | EP 3876118 A1 | 08-09-2021 |
| | | JP 2021140779 A | 16-09-2021 |
| | | US 2021279652 A1 | 09-09-2021 |
| US 2021334332 A1 | 28-10-2021 | CN 114115994 A | 01-03-2022 |
| | | EP 3905073 A1 | 03-11-2021 |
| | | JP 2021174313 A | 01-11-2021 |
| | | US 2021334332 A1 | 28-10-2021 |

EPO FORM P0459

For more details about this annex : see Official Journal of the European Patent Office, No. 12/82

**EP 4 394 665 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021140779 A
- JP 2021043503 A